(19) Europäisches Patentamt
European Patent Office
Office européen des brevets

(11) **EP 4 756 945 A1**

(12) **EUROPEAN PATENT APPLICATION**
published in accordance with Art. 153(4) EPC

(43) Date of publication:
**10.06.2026 Bulletin 2026/24**

(21) Application number: **23952664.3**

(22) Date of filing: **21.09.2023**

(51) International Patent Classification (IPC):
**H01M 10/04** (2006.01)   **H01M 50/20** (2021.01)
**H01M 50/133** (2021.01)

(52) Cooperative Patent Classification (CPC):
**H01M 10/04; H01M 50/133; H01M 50/20;**
Y02E 60/10; Y02P 70/50

(86) International application number:
**PCT/CN2023/120508**

(87) International publication number:
**WO 2025/060008 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **LIN, Chenhui**
  **Ningde, Fujian 352100 (CN)**
• **HE, Jianfu**
  **Ningde, Fujian 352100 (CN)**
• **YE, Yonghuang**
  **Ningde, Fujian 352100 (CN)**
• **JIN, Haizu**
  **Ningde, Fujian 352100 (CN)**

(74) Representative: **Lorenz Seidler Gossel Part. mbB**
**Widenmayerstr. 23**
**80538 München (DE)**

(54) **BATTERY CELL, BATTERY, AND ELECTRIC DEVICE**

(57)    A battery cell, a battery, and an electric device. The battery cell comprises: a shell; at least one electrode assembly, which is disposed inside the shell; and at least one elastic buffer pad, which is arranged on at least part of the surface of the electrode assembly and/or inside the electrode assembly, wherein the compression ratio of the elastic buffer pad in the thickness direction thereof is less than or equal to 30% under a pressure of 0.1 MPa, and the compression rate of the elastic buffer pad in the thickness direction thereof is greater than or equal to 50% under a pressure of 1 MPa.

FIG. 1

**Description**

TECHNICAL FIELD

The present application belongs to the field of battery technologies, and in particular, to a battery cell, a battery, and an electric device.

BACKGROUND

A battery as an energy storage device is widely used in various fields. Using a lithium-ion battery as an example, the lithium-ion battery which features greenness, environmental-friendliness, high energy, low carbon, and the like is used not only in energy storage power systems such as hydropower, thermal power, wind power, and solar power plants, but also in electric transportation tools such as electric bicycles, electric motorcycles, electric vehicles, and ships as well as military equipment, aerospace, and many other fields. With the development of the current society, the demand for the battery is increasingly high.

SUMMARY

In view of the technical problems mentioned in the background, the present application provides a battery cell, aiming to improve the effect of a buffer pad and improve uniformity of force applied to an electrode plate during charging and discharging.

To achieve the above object, a first aspect of the present application provides a battery cell, including:

a shell;
at least one electrode assembly, which is disposed inside the shell; and
at least one elastic buffer pad, which is arranged on at least part of the surface of the electrode assembly and/or inside the electrode assembly, wherein the compression ratio of the elastic buffer pad in the thickness direction thereof is less than or equal to 30% under a pressure of 0.1 MPa, and the compression ratio of the elastic buffer pad in the thickness direction thereof is greater than or equal to 50% under a pressure of 1 MPa.

The battery cell according to the first aspect of the present application has the following beneficial effects: On one hand, volume expansion force generated by the electrode assembly during charging and discharging and use may be buffered, and deformation of the battery cell may be suppressed. On the other hand, the elastic buffer pad may provide different strength and stress in different charging and discharging processes. The elastic buffer pad is not excessively compressed in an initial charging stage or an initial use stage and may provide certain support strength, facilitating implementation of direct attachment of the electrode assembly to an inner wall of a shell or attachment of the electrode assembly to the inner wall of the shell through the elastic buffer pad, so as to implement interaction force and improve uniformity of force applied to the electrode plate. In a later charging stage or a later cycle of a battery cell, the elastic buffer pad may be fully compressed in an expansion process of the electrode assembly, so that a space of the elastic buffer pad in a thickness direction thereof may be used for the electrode assembly to reduce the expansion force of the electrode assembly and provide larger stress. Thus, uniformity of force applied to the electrode plate in charging and discharging processes is improved while the expansion force of the electrode assembly is reduced. Therefore, the elastic buffer pad may exert a better effect, thereby maintaining uniformity of force applied to the electrode plate during charging and discharging while improving the volume stability of the battery cell during long-term use, and further reducing the risk of expansion deformation or performance deterioration of the battery cell to improve long-term use performance.

In some implementations of the present application, the elastic buffer pad is provided between the electrode assembly and the shell, and/or the elastic buffer pad is provided between two adjacent electrode assemblies. The given conditions are satisfied to facilitate improvement of volume stability of a battery cell during long-term use.

In some implementations of the present application, a compression ratio of the elastic buffer pad in a thickness direction of the elastic buffer pad under a pressure of 0.1 Mpa is less than or equal to 20%, optionally 10%; and/or, the compression ratio of the elastic buffer pad in the thickness direction thereof under a pressure of 1 Mpa is greater than or equal to 60%, optionally 80%. The given conditions are satisfied to further improve uniformity of force applied to an electrode plate in a charging or discharging process.

In some implementations of the present application, a compression ratio of the elastic buffer pad under a pressure of 0.5 Mpa is 30%-60%. The given conditions are satisfied to further improve uniformity of force applied to an electrode plate during charging and discharging while improving volume stability of a battery cell.

In some implementations of the present application, the electrode assembly is a wound electrode assembly and includes a straight portion and a corner portion. The elastic buffer pad is provided on at least a part of surfaces of the straight portion and/or the corner portion.

In some implementations of the present application, the battery cell is a prismatic battery cell.

In some implementations of the present application, the prismatic battery cell includes: at least one first elastic buffer pad and/or at least one second elastic buffer pad. The first elastic buffer pad and the electrode assembly are stacked in a thickness direction of the battery cell, and/or the second elastic buffer pad and the electrode assembly are stacked in a length direction of the battery cell. The given conditions are satisfied to facilitate a reduction in expansion force generated by the electrode assembly during use.

In some implementations of the present application, the prismatic battery cell satisfy at least one of the following conditions: in the thickness direction of the battery cell, a sum of a total thickness of the first elastic buffer pad in a free state and a total thickness of the electrode assembly in a fully discharged state is 80%-99%, optionally 85%-98%, and further optionally 90%-95% of a distance between inner wall surfaces of the shell; in the thickness direction of the battery cell, a sum of the total thickness of the first elastic buffer pad in the free state and the total thickness of the electrode assembly in a fully charged state is 95%-110%, optionally 98%-105%, and further optionally 99%-102% of the distance between the inner wall surfaces of the shell; in the length direction of the battery cell, a sum of a total thickness of the second elastic buffer pad in a free state and a length of the electrode assembly in a fully discharged state is 80%-99%, optionally 85%-98%, and further optionally 90%-95% of the distance between inner wall surfaces of the shell; and in the length direction of the battery cell, the sum of the total thickness of the second elastic buffer pad in the free state and a length of the electrode assembly in the fully charged state is 95% to 110%, optionally 98% to 105%, and further optionally 99% to 102% of the distance between the inner wall surfaces of the shell. The given conditions are satisfied to facilitate smooth insertion of the elastic buffer pad into a shell, and/or improvement of volume stability of a battery cell and uniformity of force applied to an electrode plate.

In some implementations of the present application, a ratio of the total thickness of the first elastic buffer pad in the free state to the total thickness of the electrode assembly in the fully discharged state is 2%-25%, optionally 5%-20%, and further optionally 8%-15%. The given conditions are satisfied, and thus, not only volume stability of a battery cell may be facilitated, but also an energy density of a battery cell may be balanced.

In some implementations of the present application, a ratio of an extension distance of a first elastic buffer pad in a free state in a length direction of the electrode assembly to a length of the electrode assembly is 0.8-1.2, optionally 0.85-1.1, and further optionally 0.9-1.05; and/or a ratio of the extension distance of the first elastic buffer pad in the free state in the height direction of the electrode assembly to the height of the electrode assembly is 0.8-1.2, optionally 0.85-1.1, and further optionally 0.9-1.05. The given conditions are satisfied to facilitate to enable the elastic buffer pad to cover most of a region of the electrode assembly, which not only facilitates improvement of volume stability of a battery cell, but also facilitates improvement of uniformity of force applied to an electrode plate.

In some implementations of the present application, an orthographic projection of the first elastic buffer pad on the electrode assembly is located in a region where the electrode assembly is located. The given conditions are satisfied, which not only facilitates smooth insertion of an elastic buffer pad into a shell during assembly, but also facilitates further balance of an energy density of a battery.

In some implementations of the present application, the battery cell is a cylindrical battery cell. At least one elastic buffer pad and the electrode assembly are stacked in a radial direction of the electrode assembly. A distance between inner wall surfaces of the shell is equal to a diameter of an inner cavity of the shell.

In some implementations of the present application, in the cylindrical battery cell, a sum of a total thickness of the elastic buffer pad in a free state and a total thickness of the electrode assembly in a fully discharged state is 80%-99%, optionally 85%-98%, and further optionally 90%-95% of the diameter of the inner cavity of the shell; and/or, a sum of the total thickness of the elastic buffer pad in the free state and a total thickness of the electrode assembly in a fully charged state is 85%-110%, optionally 98%-105%, and further optionally 99%-102% of the diameter of the inner cavity of the shell. The given conditions are satisfied to facilitate smooth insertion of the elastic buffer pad into a shell, and/or improvement of volume stability of a battery cell and uniformity of force applied to an electrode plate.

In some implementations of the present application, in the cylindrical battery cell, the elastic buffer pad is provided between the electrode assembly and the shell. A ratio of an extension distance of the elastic buffer pad in a free state in a circumferential direction of the electrode assembly to a perimeter of the electrode assembly is 0.8-1.2, optionally 0.85-1.1, and further optionally 0.9 to 1.05. and/or, a ratio of an extension distance of the elastic buffer pad in the free state in a height direction of the electrode assembly to a height of the electrode assembly is 0.8-1.2, optionally 0.85-1.1, and further optionally 0.9-1.05. The given conditions are satisfied to facilitate to enable the elastic buffer pad to cover most of a region of the electrode assembly, which not only facilitates improvement of volume stability of a battery cell, but also facilitates improvement of uniformity of force applied to an electrode plate.

In some implementations of the present application, in the cylindrical battery cell, the extension distance of the elastic buffer pad in a free state in a circumferential direction of the electrode assembly is less than or equal to a perimeter of the electrode assembly; and/or, an extension distance of the elastic buffer pad in the free state in the height direction of the electrode assembly is less than or equal to a height of the electrode assembly. The given conditions are satisfied, which not only facilitates smooth insertion of an elastic buffer pad into a shell during assembly, but also facilitates further balance of an energy density of a battery.

In some implementations of the present application, a thickness of a single elastic buffer pad in a free state is 2%-15%, optionally 5%-10%, of a thickness of a single electrode assembly in a fully discharged state. The given conditions are satisfied, which not only facilitates maintaining volume stability of a battery cell during a service cycle, especially at the end of use, but also may balance an energy density of a battery cell.

In some implementations of the present application, the thickness of the single elastic buffer pad in the free state is 0.2 mm-10.5 mm. The given conditions are satisfied, which may not only balance a compressible deformation amount of an elastic buffer pad and an energy density of a battery cell, but also enable a support layer to have certain strength.

A second aspect of the present application provides a battery, including: the battery cell according to the first aspect of the present application.

A third aspect of the present application provides an electric device, including: the battery according to the second aspect of the present application.

## BRIEF DESCRIPTION OF THE DRAWINGS

The above and/or additional aspects and advantages of the present application will become apparent and more readily appreciated from the following description of the embodiments taken in conjunction with the accompanying drawings, in which:

FIG. 1 is a schematic cross-sectional structural diagram of a prismatic battery cell according to an implementation of the present application.
FIG. 2 is a schematic cross-sectional structural diagram of a prismatic battery cell according to still another implementation of the present application.
FIG. 3 is a schematic cross-sectional structural diagram of a prismatic battery cell according to another implementation of the present application.
FIG. 4 is a schematic cross-sectional structural diagram of a prismatic battery cell according to still further another implementation of the present application.
FIG. 5 is a schematic cross-sectional structural diagram of a prismatic battery cell according to still further another implementation of the present application.
FIG. 6 is a schematic cross-sectional structural diagram of a prismatic battery cell according to still further another implementation of the present application.
FIG. 7 is a schematic cross-sectional structural diagram of a prismatic battery cell according to still further another implementation of the present application.
FIG. 8 is a schematic cross-sectional structural diagram of a prismatic battery cell according to still further another implementation of the present application.
FIG. 9 is a schematic cross-sectional structural diagram of a cylindrical battery cell according to an implementation of the present application.
FIG. 10 is a schematic cross-sectional structural diagram of a cylindrical battery cell according to still another implementation of the present application.
FIG. 11 is a schematic structural diagram of a battery cell according to an embodiment of the present application.
FIG. 12 is a schematic structural diagram of a battery module according to an embodiment of the present application.
FIG. 13 is a schematic structural diagram of a battery pack according to an embodiment of the present application.
FIG. 14 is an exploded view of a battery pack according to an embodiment of the present application.
FIG. 15 is a schematic diagram of an embodiment where a battery according to an implementation of the present application is used as an electric device of a power source.

Reference numerals:
11: Shell; 12: Electrode assembly; 13: Elastic buffer pad; 13a: First elastic buffer pad; 13b: Second elastic buffer pad; 1: Battery; 2: Battery module; 3: Battery pack; 4: Upper case; 5: Lower case.

## DETAILED DESCRIPTION OF PREFERRED EMBODIMENTS

The present application will be further described below with reference to specific embodiments. It should be understood that these specific embodiments are merely illustrative of the application and are not intended to limit the scope of the present application.

Implementations specifically disclosing a positive electrode active material, a preparation method thereof, a positive electrode plate, a battery, and an electric device in the present application will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and/or an upper limit, which define the boundaries of the specific range. The range defined in this way may include or not include end values and may be combined arbitrarily, that is, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded. For example, if ranges of 60 to 120 and 80 to 110 are listed for specific parameters, it is understood that the ranges of 60 to 110 and 80 to 120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In the present application, unless otherwise stated, a numerical range "a-b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps S1 and S2, meaning that the method may include steps S1 and S2 performed sequentially or steps S2 and S1 performed sequentially. For example, the above-mentioned method may further include step S3, meaning that step S3 may be added to the method in any order, e.g. the method may include steps S1, S2, and S3, or steps S1, S3, and S2, or steps S3, S1, and S2, and the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, either of the following conditions satisfies the condition "A or B": A is true (or present) and B is false (or absent); A is false (or absent) and B is true (or present); or both A and B are true (or present).

Unless otherwise specified, in the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the present application, the terms "a plurality of" and "various" mean two or more.

Unless otherwise defined, all technical and scientific terms used in the present application have the same meaning as commonly understood by those skilled in the art to which the present application belongs. The terms used herein are merely for the purpose of describing specific embodiments and are not intended to limit the present application. The terms "include", "be provided with", and any other variants thereof in the specification, claims, and accompanying drawings of the present application are intended to cover a non-exclusive inclusion. Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

Currently, with the constant advancement of the green and environmental-friendly topic, the application of batteries has been advanced into various aspects of life, including vehicles, electronic devices, energy storage devices, and the like. With the continuous expansion of application of the battery, the battery is required for higher and higher reliability. Using a lithium-ion battery as an example, the lithium-ion battery undergoes volume changes during charging and discharging cycles, overcharging and the like. Its expansion amount gradually increases with an increase in work time. Thus, deformation of a battery shell is easily caused under pressing force, affecting volume stability of a battery. In addition, if an electrode plate is over expended during charging and discharging cycles, a distance between an electrode plate and a separator may be affected, increasing a risk of lithium precipitation, and affecting a service life of a battery. In view of the problem, currently, a solution of disposing a buffer pad between or in battery cells is provided. However, due to factors such as an active material type of an electrode plate, a thickness of an active material layer, and a number of cycles, expansion amounts and expansion rates of a battery are also different in different charging and discharging processes and in charging and discharging processes in different use stages. For different charging and discharging processes and charging and discharging processes in different use stages, requirements for a stress strain of a buffer pad located inside a battery cell are different. Improper matching does not facilitate exertion of an effect of a buffer pad, and may even cause deterioration of performance of a battery cell.

In the present application, for different expansion amounts and expansion rates of an electrode assembly in a battery cell in different charging and discharging processes and different use stages, a stress-strain relationship of an elastic buffer pad is defined differently. In other words, a compression ratio less than or equal to 30% in its thickness direction under a pressure of 0.1 Mpa and a compression ratio greater than or equal to 50% in its thickness direction under a pressure of 1 Mpa are selected, so that an elastic buffer pad may provide different strength and stress during a charging process. The elastic buffer pad is not excessively compressed during initial use or charging of a battery cell. Certain support strength may be provided. Thus, direct attachment of an electrode assembly to an inner wall of a shell or attachment of an electrode assembly to an inner wall of a shell through an elastic buffer pad may be facilitated, thereby improving uniformity of force applied to an electrode plate. In a later charging stage or a later use stage of a battery cell, the elastic buffer pad may be fully compressed during an expansion process of the electrode assembly, so that a space of the elastic buffer pad in a thickness direction thereof may be used for the electrode assembly to provide larger stress. Thus, uniformity of force applied to the electrode plate in charging and discharging processes is facilitated while the expansion force of the electrode assembly is reduced.

The battery cell and the battery disclosed in the embodiments of the present application may be used in an electric device using a battery as a power supply or various energy storage systems using a battery as an energy storage component. The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a battery cell, including: a shell; at least one electrode assembly, disposed inside the shell; and at least one elastic buffer pad, which is arranged on at least part of the surface of the electrode assembly and/or inside the electrode assembly, where the compression ratio of the elastic buffer pad in the thickness direction thereof is less than or equal to 30% under a pressure of 0.1 MPa, and the compression ratio of the elastic buffer pad in the thickness direction thereof is greater than or equal to 50% under a pressure of 1 MPa.

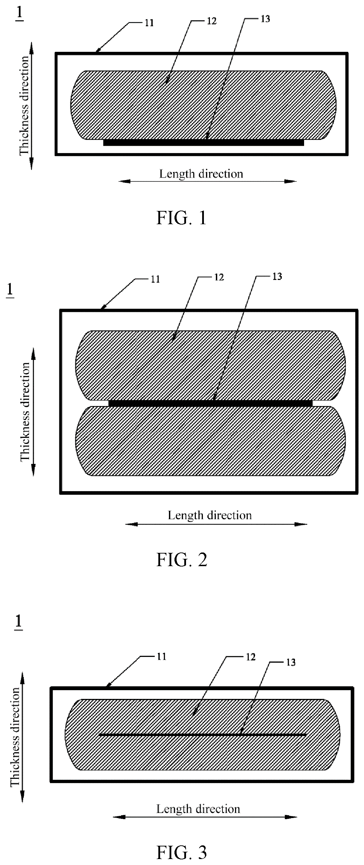

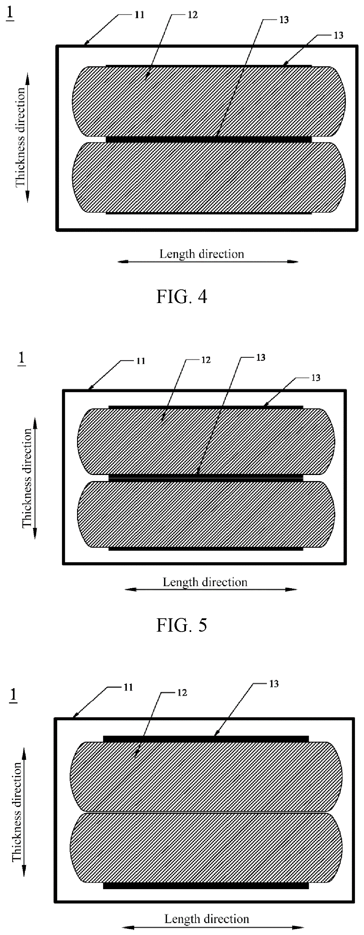

Understood with reference to FIG. 1-FIG. 7, a battery cell 1 according to the first aspect of the present application includes a shell 11, at least one electrode assembly 12, and at least one elastic buffer pad 13. The electrode assembly 12 is placed in a shell 11. The elastic buffer pad 13 may be provided on at least a part of a surface of the electrode assembly 12 and/or inside the electrode assembly 12. For example, the elastic buffer pad 13 may be disposed between the electrode assembly 12 and the shell 11 (understood with reference to FIG. 1), and/or disposed between two adjacent electrode assemblies 12 (understood with reference to FIG. 2), and/or disposed inside the electrode assembly (understood with reference to FIG. 3). The elastic buffer pad 13 may be disposed between the electrode assembly 12 and the shell 11, which may be understood as that the elastic buffer pad 13 may be disposed in at least one of regions between the electrode assembly 12 and a side wall of the shell 11, between the electrode assembly 12 and a bottom wall of the shell 11, and between the electrode assembly 12 and a top wall of the shell 11. Optionally, understood with reference to FIG. 4 or FIG. 5, the elastic buffer pad 13 may be disposed both between the electrode assembly 12 and the shell 11 and between two adjacent electrode assemblies. Still optionally, understood with reference to FIG. 1, FIG. 6, and FIG. 7, the elastic buffer pad 13 may be disposed between the electrode assembly 12 and the side wall of the shell 11. In an actual operation process, both sides of the elastic buffer pad 13 in a thickness direction thereof may be attached to the electrode assembly 12 (understood with reference to FIG. 2), or one side of the elastic buffer pad may be attached to the electrode assembly 12, and the other side may be attached to the inner wall of the shell 11.

As some specific examples, when the battery cell 1 includes only one electrode assembly 12, one or more elastic buffer pads 13 may be provided, which may be disposed between the electrode assembly 12 and the shell 11, or may be disposed inside the electrode assembly, and optionally, may be disposed between the electrode assembly 12 and the side wall of the shell 11. As other specific examples, when the battery cell 1 includes at least two electrode assemblies 12. One or more elastic buffer pads 13 may be provided. The one or more elastic buffer pads 13 may be only disposed between battery assemblies 12, or only disposed between the battery assembly 12 and the shell 11, or only disposed inside the electrode assembly 12, or may be partially disposed between the battery assemblies 12, or partially disposed between the battery assembly 12 and the shell 11. Optionally, the elastic buffer pad 13 disposed between a battery assembly 12 and a shell 11 may be disposed between the electrode assembly 12 and a side wall of the shell 11.

Optionally, a thickness direction of at least one elastic buffer pad 13 is the same as a thickness direction of a battery cell 1 (understood with reference to FIG. 1-FIG. 6, and FIG. 8). Further optionally, the thickness direction of the at least one elastic buffer pad 13 is the same as the thickness directions of the battery cell 1 and the electrode assembly 12.

In the battery cell of the present application, at least one electrode assembly 12 and at least one elastic buffer pad 13 are stacked in a first direction. Optionally, the first direction may be a thickness direction of the electrode assembly 12. When the electrode assembly 12 is a wound electrode assembly and includes a straight portion and a corner portion, the first direction may be a thickness direction of the straight portion. When the electrode assembly 12 is cylindrical, the first direction is a radial direction of the electrode assembly. A distance between inner wall surfaces of a shell 11 in the first direction is a diameter of an inner cavity of the shell.

In a charging and discharging process of a battery cell, as a remaining capacity (namely, an SOC value) increases, deformation and expansion force generated by an electrode assembly is also increased. As the number of cycles increases, the expansion amount and expansion force generated by the electrode assembly during the charging and discharging process also usually increase. In other words, the expansion amount and expansion force generated by the electrode assembly during the charging and discharging process at a later stage of a service life of a battery are usually greater than those at an initial stage of a service life of a battery. In the battery cell of the present application, strain of an elastic buffer pad under different stress states is required. In other words, the elastic buffer pad is selected to have a compression ratio in a thickness direction thereof under a pressure of 0.1 Mpa that is less than or equal to 30% (for example, less than or equal to 30%, 28%, 25%, 22%, 20%, 18%, 16%, 14%, 12%, 10%, 8%, 6%, 4%, etc., or a range composed of any of the above values), or a compression ratio in a thickness direction thereof under a pressure of 1 Mpa that is larger than or equal to 50% (for example, larger than or equal to 50%, 55%, 60%, 65%, 70%, 75%, 80%, 85%, etc., or a range composed of any of the above values). Further, the elastic buffer pad may provide different strength and stress in different charging and discharging processes. In an initial charging stage or an initial use stage of a battery cell, an elastic buffer pad is not excessively compressed, and may provide certain support strength. Thus, an implementation of direct bonding of an electrode assembly to an inner wall of a shell or bonding of an elastic buffer pad and an inner wall of a shell is facilitated, so as to implement interaction force, improve uniformity force applied to an electrode plate, and reduce a risk of wrinkles in a local area of an electrode assembly and a decrease of an utilization rate of active lithium caused by abnormalities such as purple spots and lithium precipitation in a wrinkle region. In a later charging stage or a later cycle stage of a battery cell, the elastic buffer pad may be fully compressed during an expansion process of the electrode assembly, so that a space of the elastic buffer pad in a thickness direction thereof may be used for the electrode assembly to reduce expansion force for the electrode assembly to provide larger stress. Thus, uniformity of force applied to the electrode plate in charging and discharging processes is improved while the expansion force of the electrode assembly is reduced.

The compression ratio of the elastic buffer pad in the thickness direction thereof under different stresses may be determined with reference to GB/T 1041-92. The compression ratio of the elastic buffer pad in the thickness direction thereof is a ratio of a thickness change of the elastic buffer pad in a free state and a stress state to the thickness in the free state. The free state of the elastic buffer pad refers to a state in which the elastic buffer pad is not subjected to any external force. The stress state of the elastic buffer pad refers to a state in which the elastic buffer pad is subjected to certain compressive stress. The thickness of the elastic buffer pad in the free state may be tested by conventional instruments and conventional methods in the art. For example, a Mitutoyo ID-C112MX micrometer thickness gauge (or the same type of instrument) may be used for testing under test force less than or equal to 1.8 N. A plurality of points (such as 5, 10, etc.) are randomly measured for obtaining an average value. The thickness test for the elastic buffer pad in the stress state may be performed by using two parallel flat plates. The elastic buffer pad is located between the flat plates. The flat plates are used to apply a preset pressure to the elastic buffer pad and measure a distance between the flat plates. The instrument used to measure the distance between the flat plates may include, but is not limited to, a conventional instrument such as a vernier caliper.

The battery cell according to the first aspect of the present application has the following beneficial effects: The elastic buffer pad may exert a better effect, thereby maintaining uniformity of force applied to the electrode plate during charging and discharging while improving the volume stability of the battery cell during long-term use, and further reducing the risk of expansion deformation or performance deterioration of the battery cell to improve long-term use performance.

It can be understood that, in the embodiments of the present application, a battery cell includes, but is not limited to, a shell, an electrode assembly, and an elastic buffer pad. For example, the battery cell may further include an electrolyte. In the embodiments of the present application, the battery cell includes, but is not limited to, a secondary battery cell, a primary battery cell, and the like. In the embodiments of the present application, the battery cell includes a lithium-ion battery cell, a sodium-ion battery cell, a magnesium-ion battery cell, or the like. In the embodiments of the present application, the battery cell includes, but is not limited to, a hard battery cell, a soft pack battery cell, and the like. The hard battery cell includes, but is not limited to, a metal battery shell cell and the like.

Further, in addition to satisfying the above conditions, the battery cell according to the first aspect of the present application may further control the compression ratio of the elastic buffer pad in the thickness direction thereof under a specific stress, the relationship between the elastic buffer pad and the electrode assembly and/or the size of the shell, the arrangement manner for different battery cell types, and the like to further improve performance of a battery cell. That is, in addition to satisfying the above conditions, one or more of the following conditions may be optionally satisfied.

In some implementations of the present application, an elastic buffer pad 13 is provided between an electrode assembly 12 and a shell 11, and/or the elastic buffer pad 13 is provided between two adjacent electrode assemblies 12. This may be understood with reference to FIG. 1, FIG. 2, and FIG. 4. The given conditions are satisfied to further facilitate improvement of volume stability of a battery cell during long-term use and reduce a risk of expansion deformation or performance deterioration of the battery cell. Optionally, the elastic buffer pad 13 may be provided only between an electrode assembly 12 and a shell 11 and/or between two adjacent electrode assemblies 12, thereby not only facilitating molding of an electrode assembly, but also facilitating a reduction of expansion force generated by an electrode assembly on a shell.

In some implementations of the present application, a compression ratio of the elastic buffer pad 13 in a thickness direction of the elastic buffer pad under a pressure of 0.1 Mpa may be less than or equal to 20%, optionally 10%. An elastic buffer pad that further satisfies the given conditions is selected. Thus, further implementation that the elastic buffer pad is not excessively compressed in an initial charging stage of a battery cell may be facilitated, so that certain support strength may be provided, and implementation of direct attachment of an electrode assembly to an inner wall of a shell or attachment of the elastic buffer pad to the inner wall of the shell may be facilitated, so that interaction force may be implemented to improve uniformity of force applied to an electrode plate.

In some implementations of the present application, a compression ratio of the elastic buffer pad 13 in a thickness direction thereof under a pressure of 1 Mpa may be greater than or equal to 60%, optionally 80%. The elastic buffer pad that further satisfies the given conditions is selected. In a later charging stage or a later cycle stage of a battery cell, the elastic buffer pad may be fully compressed during an expansion process of the electrode assembly, so that a space of the elastic buffer pad in a thickness direction thereof may be used for the electrode assembly to reduce expansion force for the electrode assembly to provide larger stress. Thus, expansion force of the electrode assembly is facilitated and volume stability of the battery cell is improved, and also it is facilitated to maintain uniformity of force applied to the electrode plate during charging and discharging processes.

In some implementations of the present application, the compression ratio of the elastic buffer pad 13 under a pressure of 0.5 Mpa may be 30%-60%.

For example, the compression ratio of the elastic buffer pad 13 under a pressure of 0.5 Mpa may be 30%, 35%, 40%, 45%, 50%, 55%, 60%, or the like, or may be a range composed of any of the above values. An elastic buffer pad that further satisfies the given conditions is selected, further facilitating the elastic buffer pad to provide different strength and stress in different charging and discharging processes, further maintaining uniformity of force applied to an electrode plate during charging and discharging while further improving volume stability of the battery cell.

In some implementations of the present application, the electrode assembly 12 may be a wound electrode assembly and include a straight portion and a corner portion. The elastic buffer pad 13 may be disposed on at least a part of the surface of the straight portion and/or the corner portion.

In the battery cell of the present application, the electrode assembly may be a laminated electrode assembly or a wound electrode assembly. The wound electrode assembly may in turn be used in a prismatic shell or in a cylindrical shell. During charging and discharging cycles, the wound electrode assembly, particularly a prismatic battery cell with a wound electrode assembly, enables a relatively high risk of uneven stress distribution across an electrode plate. The wound electrode assembly is combined with the elastic buffer pads, so that a problem of an uneven stress distribution in the wound electrode assembly is mitigated, reducing polarization differences, and improving volumetric stability and long-term cycling performance. Optionally, the electrode assembly 12 may be a wound electrode assembly and include a straight portion and a corner portion. The elastic buffer pad 13 may be disposed on at least a part of surfaces of the straight portion and/or the corner portion, thereby further alleviating a problem of uneven stress on an electrode plate in a prismatic battery cell. It may be understood that the prismatic battery cell includes, but is not limited to, a square battery cell. Still, optionally, the straight portion of the wound electrode assembly may be provided with the elastic buffer pad 13.

In some implementations of the present application, understood with reference to FIG. 1 to FIG. 8, the battery cell 1 may be a prismatic battery cell.

In some implementations of the present application, the prismatic battery cell may include: at least one first elastic buffer pad 13a and/or at least one second elastic buffer pad 13b. The first elastic buffer pad 13a and the electrode assembly 12 may be stacked in a thickness direction of a battery cell, and/or the second elastic buffer pad 13b and the electrode assembly 12 may be stacked in a length direction of the battery cell.

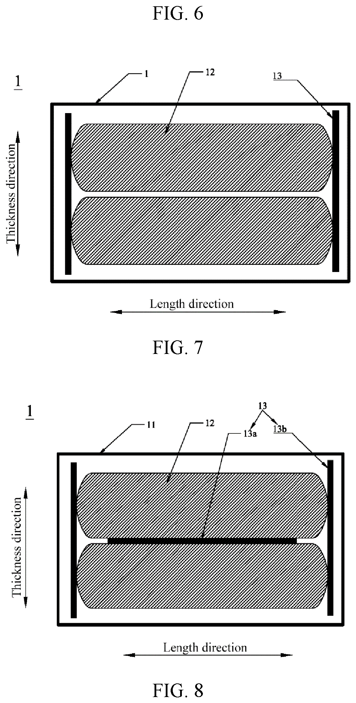

Understood with reference to FIG. 8, taking a square battery cell as an example, in a given structural design, a thickness of a first elastic buffer pad 13a may extend in a thickness direction of a battery cell, and/or a thickness of a second elastic buffer pad 13b may extend along a length direction of a battery cell. The arrangement of the first elastic buffer pad 13a and the second elastic buffer pad 13b facilitates reducing expansion force generated by an electrode assembly during use. Optionally, a square battery cell may include at least one first elastic buffer pad 13a. In a shell 11 of the square battery cell, areas of two side walls disposed opposite to each other in a thickness direction of the battery cell are usually larger. A first elastic buffer pad is disposed between the two side walls, facilitating to increase a contact area between an elastic buffer pad and an electrode assembly, and thereby not only helping to further reduce expansion force that may be generated by an electrode assembly during use, but also helping to further alleviate a problem of uneven stress that may exist on an electrode plate in a wound electrode assembly. Further optionally, a prismatic battery cell may include only a first elastic buffer pad 13a. The given conditions are satisfied, which not only facilitates reducing expansion force of an electrode assembly and improving a problem of uneven stress that may exist on the electrode plate, but also facilitates omitting a second elastic buffer pad to simplify a structure of a battery cell and increase an energy density of the battery cell.

In some implementations of the present application, in the prismatic battery cell, in a thickness direction of the battery cell, a sum of a total thickness of a first elastic buffer pad 13a in a free state and a total thickness of the electrode assembly 12 in a fully discharged state may be 80%-99%, optionally 85%-98%, and further optionally 90%-95% of a distance between inner wall surfaces of a shell 11; and/or, the sum of the total thickness of the first elastic buffer pad 13a in the free state and a total thickness of the electrode assembly 12 in a fully charged state may be 95%-110%, optionally 98%-105%, and further optionally 99%-102% of the distance between the inner wall surfaces of the shell 11.

Understood with reference to FIG. 8, using a square battery cell as an example, a sum of a total thickness d of a first elastic buffer pad 13a in a free state and a total thickness $d_2$ of an electrode assembly 12 in a fully discharged state may be 80%-99% of a distance $d_0$ between two inner wall surfaces of a shell 11 that are oppositely disposed in a thickness direction thereof, namely, $80\% \leq \frac{d+d_2}{d_0} \leq 99\%$. For example, a value of $\frac{d+d_2}{d_0}$ may be 80%, 82%, 85%, 87%, 89%, 91%, 95%, 97%, 99%, etc., or may be a range composed of any of the above values. In the present application, the fully discharged state refers to a state obtained through discharging at a constant current of 0.33C of a rated capacity of a battery cell to a lower limit of a cut-off voltage at room temperature. The given conditions are satisfied, so that a gap between an elastic buffer pad and an electrode assembly and a shell before insertion into a shell may be enabled, facilitating smooth insertion of the elastic buffer pad and the electrode assembly into the shell and facilitating assembly of a battery cell. Optionally, $85\% \leq \frac{d+d_2}{d_0} \leq 98\%$, and further optionally $90\% \leq \frac{d+d_2}{d_0} \leq 95\%$, where the given conditions are satisfied to further facilitate smooth insertion of an elastic buffer pad and an electrode assembly into a shell, and also facilitate implementation of direct or indirect contact between an electrode assembly and an inner wall of a shell after charging, thereby improving uniformity of force applied to an electrode plate.

Using a square battery cell as an example, a sum of a total thickness d of a first elastic buffer pad 13a in a free state and a total thickness $d_1$ of an electrode assembly 12 in a fully charged state may be 95%-99% of a distance $d_0$ between two inner wall surfaces of a shell 11 that are oppositely disposed in a thickness direction thereof, namely, $95\% \leq \frac{d+d_1}{d_0} \leq 110\%$. For example, a value of $\frac{d+d_1}{d_0}$ may be 95%, 97%, 99%, 100%, 102%, 104%, 106%, 108%, 110%, etc., or may be a range composed of any of the above values. In the present application, the fully charged state refers to a state obtained through charging at a constant current of 0.33C of a rated capacity of a battery cell to an upper limit of a cut-off voltage at room temperature, and then charging at a constant voltage until a current is 0.05C, or a state obtained through changing under this condition until the SOC of a battery no longer changes. The given conditions are satisfied to further facilitate direct attachment of an electrode assembly to an inner wall of a shell or attachment of the electrode assembly to the inner wall of the shell through an elastic buffer pad (or a mylar film, namely, an insulating film) during use of a battery cell to implement interaction force, thereby further facilitating improvement of uniformity of force applied to an electrode plate, reducing a risk of wrinkles in a local region of an electrode assembly and a decrease in an utilization rate of active lithium caused by abnormalities such as purple spots and lithium precipitation in a wrinkle region, and improving a capacity retention rate of a battery cell. Alternatively, $98\% \leq \frac{d+d_1}{d_0} \leq 105\%$, and further optionally, $99\% \leq \frac{d+d_1}{d_0} \leq 102\%$, where the given conditions are satisfied, so that expansion force that an electrode assembly may produce on a shell may be further reduced while improving uniformity of force applied to an electrode plate.

The given conditions are satisfied, which not only facilitates assembly of a battery cell, but also facilitates improvement of volume stability of a battery cell and uniformity of stress applied to an electrode plate, thereby facilitating a reduction of a risk of expansion deformation or performance deterioration of a battery cell.

In some implementations of the present application, in a prismatic battery cell, in a length direction of the battery cell, a sum of a total thickness of a second elastic buffer pad 13b in a free state and a length of an electrode assembly 12 in a fully discharged state may be 80%-99%, optionally 85%-98%, and further optionally 90%-95% of a distance between inner wall surfaces of a shell 11; and/or, a sum of the total thickness of the second elastic buffer pad 13b in the free state and a length of the electrode assembly 12 in a fully charged state may be 85%-110%, optionally 98%-105%, and further optionally 99%-102% of the distance between the inner wall surfaces of the shell 11.

For example, understood with reference to FIG. 8, using a square battery cell as an example, a sum of a total thickness of a second elastic buffer pad 13b in a free state and a length of an electrode assembly 12 in a fully discharged state may be 80%, 82%, 85%, 87%, 89%, 91%, 95%, 97%, 99%, etc of a distance between two inner wall surfaces of a shell 11 that are oppositely disposed in a thickness direction thereof, or may be a range composed of any of the above values. The length direction of the electrode assembly 12 in the fully discharged state and the length direction of the inner cavity of the shell are shown in FIG. 8. In the present application, the length of the electrode assembly 12 may be the maximum extension distance in the length direction of the battery cell. The given conditions are satisfied, so that a gap between an elastic buffer pad and an electrode assembly and a shell before insertion into a shell may be enabled, facilitating smooth insertion of the elastic buffer pad and the electrode assembly into the shell and facilitating assembly of a battery cell. Optionally, the sum of the total thickness of the second elastic buffer pad 13b in the free state and the length of the electrode assembly 12 in the fully discharged state may be 85%-98%, and optionally 90%-95% of the distance between the two inner wall surfaces of the shell 11 that are oppositely disposed along the length direction thereof. The given conditions are satisfied to further facilitate smooth insertion of an elastic buffer pad and an electrode assembly into a shell, and also facilitate direct or indirect contact between an electrode assembly and an inner wall of a shell after charging, thereby improving uniformity of force applied to an electrode plate.

For example, understood with reference to FIG. 8, using the square battery cell as an example, the sum of the total thickness of the second elastic buffer pad 13b in the free state and the length of the electrode assembly 12 in the fully charged state may be 95%, 97%, 99%, 100%, 102%, 104%, 106%, 108%, 110%, etc. of the distance between the two inner wall surfaces of the shell 11 that are disposed opposite to each other along the length direction thereof, or may be a range composed of any of the above values. The given conditions are satisfied to further facilitate the electrode assembly to directly attach to the inner wall of the shell or attach to the inner wall of the shell through the elastic buffer pad (or a mylar film) during use to implement interaction force. Thus, improvement of uniformity of force applied to an electrode plate is further facilitated to reduce risks of wrinkles in a local area of an electrode assembly and a decrease of a utilization rate of active lithium caused by abnormalities such as purple spots and lithium precipitation in a wrinkle region, thereby improving a capacity retention rate of a battery cell. Optionally, the sum of the total thickness of the second elastic buffer pad 13b in the free state and the length of the electrode assembly 12 in the fully charged state may be 98%-105%, and optionally 99%-102% of the distance between the two inner wall surfaces of the shell 11 that are oppositely disposed along the length direction thereof. The given conditions are satisfied, which may further reduce expansion force that an electrode assembly may generate on a shell while improving uniformity of force applied to an electrode plate.

The given conditions are satisfied, which not only facilitates assembly of a battery cell, but also facilitates improvement of volume stability of a battery cell and uniformity of stress applied to an electrode plate, thereby facilitating a reduction of a risk of expansion deformation or performance deterioration of a battery cell.

In some implementations of the present application, the ratio of the total thickness of the first elastic buffer pad 13a in the free state to the total thickness of the electrode assembly 12 in the fully discharged state may be 2%-25%, optionally 5%-20%, and further optionally 8%-15%.

Understood with reference to FIG. 8, the ratio of a total thickness d of a first elastic buffer pad 13a in a free state to a total thickness $d_2$ of an electrode assembly 12 in a fully discharged state may be 2%-25%, namely, $2\% \leq d/d_2 \leq 25\%$. For example, the value of $d/d_2$ may be 2%, 3%, 5%, 7%, 9%, 11%, 13%, 15%, 17%, 19%, 21%, 23%, 25%, etc., or may be a range composed of any of the above values. The value of $d/d_2$ is increased to facilitate improvement of absorption capacity of an elastic buffer pad to expansion deformation and expansion force generated by an electrode assembly and facilitate further suppression of expansion deformation of a battery cell. The value of $d/d_2$ satisfies the given conditions, which not only facilitates maintaining volume stability of a battery cell during a service cycle, especially at the end of use, but also may balance an energy density of a battery cell. Optionally, the value of $d/d_2$ may be 5%-20%, and further optionally 8%-15%. The given conditions are satisfied to further balance volume stability and an energy density of a battery cell in a service cycle, especially in a late use stage.

The given conditions are satisfied, and thus, not only volume stability of a battery cell may be facilitated, but also an energy density of a battery cell may be balanced.

In some implementations of the present application, a ratio of an extension distance of a first elastic buffer pad 13a in a free state in a length direction of an electrode assembly 12 to a length of an electrode assembly 12 may be 0.8-1.2, optionally 0.85-1.1, and further optionally 0.9-1.05; and/or a ratio of an extension distance of the first elastic buffer pad 13a in the free state in the height direction of the electrode assembly 12 to the height of the electrode assembly 12 may be 0.8-1.2, optionally 0.85-1.1, and further optionally 0.9-1.05.

Understood with reference to FIG. 8, the ratio of the extension distance of the first elastic buffer pad 13a in the free state in the length direction of the electrode assembly 12 to the length of the electrode assembly 12 may be 0.8, 0.85, 0.9, 0.95, 1, 1.05, 1.1, 1.15, 1.2, or the like, or may be a range composed of any of the above values. In the ratio, the length of the electrode assembly refers to a maximum extension distance of an electrode assembly in a fully charged state in a length direction of a battery cell, and the length of the electrode assembly and the extension distance of the first elastic buffer pad in the free state along the length direction of the electrode assembly may be measured by conventional methods and conventional instruments.

Understood with reference to FIG. 8, the ratio of the extension distance of the first elastic buffer pad 13a in the free state in the height direction of the electrode assembly 12 to the height of the electrode assembly 12 may be 0.8-1.2, 0.8, 0.85, 0.9, 0.95, 1, 1.05, 1.1, 1.15, 1.2, or the like, or may be a range composed of any of the above values. In the ratio, the height of the electrode assembly refers to a maximum extension distance of an electrode assembly in a fully charged state in a height direction of a battery cell, and the height of the electrode assembly and the extension distance of the first elastic buffer pad in the free state along the height direction of the electrode assembly may be measured by conventional methods and conventional instruments.

The sizes of the first elastic buffer pad and the electrode assembly satisfy the given conditions to facilitate to enable the elastic buffer pad to cover most of the region of the electrode assembly, which not only facilitates improvement of volume stability of a battery cell, but also facilitates further improvement of uniformity of force applied to an electrode plate to reduce a risk of deteriorating performance of a battery cell.

In some implementations of the present application, understood with reference to FIG. 8, the orthographic projection of the first elastic buffer pad 13a on the electrode assembly 12 may be located within a region where the electrode assembly 12 is located. The first elastic buffer pad satisfies the given conditions, which not only facilitates smooth insertion of an elastic buffer pad into a shell during assembly, but also facilitates further balance of an energy density of a battery.

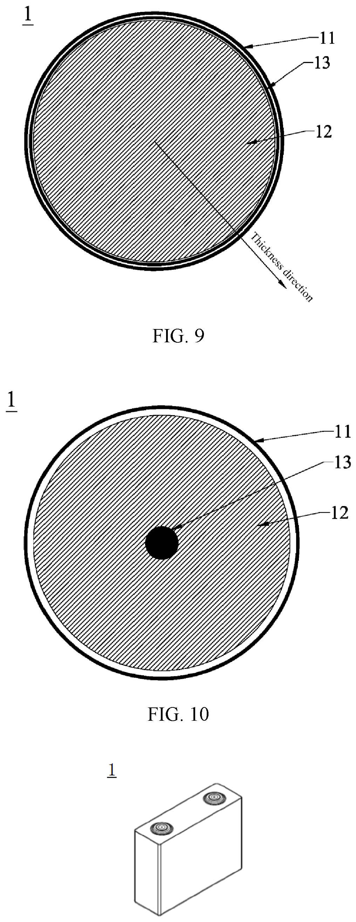

In some implementations of the present application, understood with reference to FIG. 9 and FIG. 10, a battery cell 1 may be a cylindrical battery cell. At least one elastic buffer pad 13 and an electrode assembly 12 are stacked in a radial direction of the electrode assembly 12. A distance between inner wall surfaces of the shell 11 is equal to an inner cavity diameter of the shell 11. In other words, the thickness of the electrode assembly 12 may extend in a radial direction thereof. The distance between the inner wall surfaces of the shell 11 may be equal to or slightly smaller than the diameter of the inner cavity of the shell 11. For example, the difference between the distance between the inner wall surfaces of the shell 11 and the diameter of the inner cavity of the shell 11 may be less than or equal to 2%, and optionally less than or equal to 1%. The cylindrical battery cell usually includes only one wound electrode assembly. The elastic buffer pad may be disposed inside the wound electrode assembly to enable a laminated unit of an electrode assembly to start to wind around the elastic buffer pad. And/or, the elastic buffer pad may be provided between the wound electrode assembly and the shell. In this application, the diameter of the inner cavity of the shell 11 may be understood as an average diameter of the inner cavity of the shell.

In some implementations of the present application, in the cylindrical battery cell, the sum of the total thickness of the elastic buffer pad 13 in the free state and the total thickness of the electrode assembly 12 in the fully discharged state may be 80%-99%, optionally 85%-98%, and further optionally 90%-95% of the diameter of the inner cavity of the shell 11; and/or, the sum of the total thickness of the elastic buffer pad 13 in the free state and the total thickness of the electrode assembly 12 in the fully charged state may be 85%-110%, optionally 98%-105%, and further optionally 99%-102% of the diameter of the inner cavity of the shell 11.

For example, understood with reference to FIG. 9, the total thickness of the elastic buffer pad 13 in the free state and the total thickness of the electrode assembly 12 in the fully discharged state (or the fully discharged state) may be understood as an average diameter of an electrode assembly plus twice the thickness of a single-layer elastic buffer pad 13 in a free state. In FIG. 10, the total thickness of the elastic buffer pad 13 in the free state and the total thickness of the electrode assembly 12 in the fully discharged state (or fully discharged state) may be understood as the average diameter of the elastic buffer pad 13 plus twice the thickness of the electrode assembly. In the present application, the diameter of the inner cavity of the shell 11 may be understood as an average diameter of the inner cavity of the shell, which may be measured by a conventional method and a conventional instrument.

Understood with reference to FIG. 9 and FIG. 10, in the cylindrical battery cell, the sum of the total thickness of the elastic buffer pad 13 in the free state and the total thickness of the electrode assembly 12 in the fully discharged state may be 80%, 82%, 85%, 87%, 89%, 91%, 95%, 97%, 99%, etc. of the diameter of the inner cavity of the shell 11, or may be a range composed of any of the above values. The given conditions are satisfied to enable a gap between the elastic buffer pad and the electrode assembly and a shell before insertion into the shell, which facilitates smooth placement of an elastic buffer pad and an electrode assembly into a shell and facilitates assembly of a battery cell. The sum of the total thickness of the elastic buffer pad 13 in the free state and the total thickness of the electrode assembly 12 in the fully charged state may be 95%, 97%, 99%, 100%, 102%, 104%, 106%, 108%, 110%, etc., of the diameter of the inner cavity of the shell 11, or may be a range composed of any of the above values. The given conditions are satisfied to further facilitate the electrode assembly to directly attach to the inner wall of the shell or attach to the inner wall of the shell through the elastic buffer pad (or a mylar film) during use of a battery cell to implement the interaction force. Thus, improvement of uniformity of force applied to an electrode plate is further facilitated to reduce risks of wrinkles in a local area of an electrode assembly and a decrease of a utilization rate of active lithium caused by abnormalities such as purple spots and lithium precipitation in a wrinkle region, thereby improving a capacity retention rate of a battery cell.

The given conditions are satisfied, which not only facilitates assembly of a battery cell, but also facilitates improvement of volume stability of a battery cell and uniformity of stress applied to an electrode plate, thereby facilitating a reduction of a risk of expansion deformation or performance deterioration of a battery cell.

In some implementations of the present application, in the cylindrical battery cell, the elastic buffer pad 13 may be disposed between the electrode assembly 12 and the shell 11. A ratio of an extension distance of the elastic buffer pad 13 in a free state in a circumferential direction of an electrode assembly 12 to a perimeter of the electrode assembly 12 may be 0.8-1.2, optionally 0.85-1.1, and further optionally 0.9-1.05; and/or a ratio of an extension distance of the elastic buffer pad 13 in the free state in the height direction of the electrode assembly 12 to the height of the electrode assembly 12 may be 0.8-1.2, optionally 0.85-1.1, and further optionally 0.9-1.05.

Understood with reference to FIG. 9, the ratio of the extension distance of the elastic buffer pad 13 in the free state in the circumferential direction of the electrode assembly 12 to the perimeter of the electrode assembly 12 may be 0.8, 0.85, 0.9, 0.95, 1, 1.05, 1.1, 1.15, 1.2, etc., or may be a range composed of any of the above values. In the ratio, the perimeter of the electrode assembly refers to the average perimeter of the electrode assembly in the fully charged state. The ratio of the extension distance of the elastic buffer pad 13 in the free state in the height direction of the electrode assembly 12 to the height of the electrode assembly 12 may be 0.8, 0.85, 0.9, 0.95, 1, 1.05, 1.1, 1.15, 1.2, etc., or may be a range composed of any of the above values. In the ratio, the height of the electrode assembly refers to a maximum extension distance of the electrode assembly in the height direction of the battery cell in the fully charged state. In the present application, the perimeter and height of the electrode assembly, and the extension distance of the elastic buffer pad 13 in the free state in the circumferential direction, or the height of the electrode assembly may be measured by conventional methods and conventional instruments.

The sizes of the first elastic buffer pad and the electrode assembly satisfy the given conditions to facilitate to enable the elastic buffer pad to cover most of the region of the electrode assembly, which not only facilitates improvement of volume stability of a battery cell, but also facilitates further improvement of uniformity of force applied to an electrode plate to reduce a risk of deteriorating performance of a battery cell.

In some implementations of the present application, in the cylindrical battery cell, the extension distance of the elastic buffer pad 13 in the free state in the circumferential direction of the electrode assembly 12 is less than or equal to the perimeter of the electrode assembly 12; and/or the extension distance of the elastic buffer pad 13 in the free state in the height direction of the electrode assembly 12 is less than or equal to the height of the electrode assembly 12. The elastic buffer pad satisfies the given conditions, which not only facilitates smooth insertion of an elastic buffer pad into a shell during assembly, but also facilitates further balance of an energy density of a battery.

In some implementations of the present application, the thickness of the single elastic buffer pad 13 in the free state may be 2%-15%, optionally 5%-10%, of the thickness of the single electrode assembly 12 in the fully discharged state. For example, the thickness of the single elastic buffer pad 13 in the free state may be 2%, 3%, 5%, 7%, 9%, 11%, 13%, 15%, etc. of the thickness of the single electrode assembly 12 in the fully discharged state, or may be a range composed of any of the above values. The given conditions are satisfied, which not only facilitates maintaining volume stability of a battery cell during a service cycle, especially at the end of use, but also may balance an energy density of a battery cell.

In some implementations of this application, a thickness of a single elastic buffer pad 13 in the free state may be 0.2 mm-10.5 mm. For example, the thickness of the single elastic buffer pad 13 in the free state may be 0.2 mm, 0.5 mm, 1 mm, 2 mm, 3 mm, 4 mm, 5 mm, 6 mm, 7 mm, 8 mm, 9 mm, 10 mm, 10.5 mm, or the like, or may be a range composed of any of the above values. The given conditions are satisfied, which may not only balance a compressible deformation amount of an elastic buffer pad and an energy density of a battery cell, but also enable a support layer to have certain strength.

It can be understood that, in the battery cell according to the first aspect of the present application, a structure and a material of an elastic buffer pad are not particularly limited, as long as the compression ratio of the elastic buffer pad in the thickness direction thereof under a preset pressure can meet given requirements. For example, at least one of a material, a porosity, a pore size, etc. of the elastic buffer pad may be adjusted to obtain elastic buffer pads with different stress-strain relationships to enable different compression ratios of the elastic buffer pad in the thickness direction thereof under the preset pressure.

For example, the elastic buffer pad may be a single-layer structure. The material thereof may include, but is not limited to, at least one of foamed polyethylene, polypropylene, polyurethane, silicone rubber, and the like.

For example, the elastic buffer pad may be a multi-layer structure, and may specifically include an elastic buffer layer and a support layer. The support layer may be disposed on at least one of two sides of the elastic buffer layer in a thickness direction thereof. For example, in the battery cell, at least one elastic buffer pad includes an elastic buffer layer and a support layer, and/or at least one elastic buffer pad includes an elastic buffer layer and two support layers. Optionally, the elastic modulus of the elastic buffer layer is less than the elastic modulus of the support layer, and/or, the compression ratio of the elastic buffer layer in the thickness direction thereof is greater than the compression ratio of the support layer in the thickness direction thereof under the same pressure, and/or, the porosity of the elastic buffer layer may be greater than the porosity of the support layer. For example, the porosity of the elastic buffer layer 31 may be 40%-95%, optionally 55%-90%, and further optionally 70%-85%, and the porosity of the support layer 32 may be less than or equal to 5%. Still optionally, the elastic buffer layer may include at least one of foamed polyethylene, polypropylene, polyurethane, and silicone rubber. The support layer may include, but is not limited to, at least one of high-density polyethylene, polymethacrylate, polyethylene terephthalate, and polytetrafluoroethylene. Still optionally, at least one of the following conditions may be further satisfied: the thickness of the elastic buffer layer may be greater than the thickness of the support layer; in a single elastic buffer pad, the ratio of the total thickness of the support layer to the free thickness of the elastic buffer pad layer may be 0.005-0.1, for example, 0.02-0.05; the elastic buffer layer may have a thickness of 0.2 mm-10 mm in a natural state, and the single-layer support layer may have a thickness of 30 $\mu$m-200 $\mu$m; and the elastic buffer layer may be adhesively connected to the support layer. The elastic buffer layer may be supported by combining the support layer with the elastic buffer layer, which may not only suppress thermal shrinkage of an elastic buffer layer (such as thermal shrinkage during a vacuum baking process), but also may optionally suppress thermal shrinkage of the elastic buffer layer in the two dimensional direction perpendicular to the thickness direction thereof by using the support layer, thereby improving the problem that the elastic buffer layer loses its original function due to thermal shrinkage, and also improving the problem of material damage for the elastic buffer pad due to mechanical stress in a later use stage of a battery. Further, the elastic buffer pad is placed inside a battery cell to further facilitate improvement of volume stability of a battery during long-term use and improve long-term use performance.

In some embodiments of the present application, the electrode assembly 12 may include a positive electrode plate, a negative electrode plate, and a separator. The positive electrode plate, the negative electrode plate, and the separator may form an electrode assembly through a winding process. During charge and discharge of a battery, active ions are intercalated and deintercalated back and forth between the positive electrode plate and the negative electrode plate. The separator is disposed between the positive electrode plate and the negative electrode plate to play a separating role.

[Positive electrode plate]

In the battery, the positive electrode plate generally includes an anode current collector and an anode film layer disposed on the anode current collector, and the anode film layer includes an anode active material. The anode current collector may be a conventional metal foil or a composite current collector (a composite current collector may be formed by disposing a metal material on a polymer base material). As an example, the anode current collector may be an aluminum foil.

In the present application, the specific type of the anode active material is not limited, and an anode material which can be used for an anode of a secondary battery known in the art may be used, and persons skilled in the art may select the material according to actual requirements. For example, the anode active material may include, but is not limited to, an anode active material of a lithium-containing phosphate of a lithium transition metal oxide and/or olivine structure. The lithium transition metal oxide may include an undoped and/or optionally doped modified lithium transition metal oxide, and an uncoated and/or coated modified lithium transition metal oxide, and the lithium-containing phosphate of the olivine structure may include an undoped and/or optionally doped modified lithium-containing phosphate of the olivine structure and an uncoated and/or coated modified lithium-containing phosphate of the olivine structure. The anode active materials within a given range may be obtained either by preparation or by commercial paths.

In some specific embodiments of the present application, the anode active material layer may further optionally include a binder, a conductive agent, and other optional auxiliary agents. As an example, the conductive agent may include one or more of superconducting carbon, acetylene black, carbon black, ketjen black, a carbon dot, a carbon nanotube, Super P (SP), graphene, and a carbon nanofiber. As an example, the binder may include, but is not limited to, one or more of styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethylcellulose (CMC), polyvinyl alcohol (PVA), and polyvinyl butyral (PVB).

[Negative electrode plate]

In the battery, the cathode plate generally includes a cathode current collector and a cathode active material layer disposed on the cathode current collector, and the cathode active material layer includes a cathode active material. The cathode current collector may be a conventional metal foil or a composite current collector (for example, a metal material may be disposed on a polymer substrate to form a composite current collector). As an example, the cathode current collector may be a copper foil.

In some embodiments of the present application, the battery cell in the first aspect of the present application may be a lithium-ion battery cell, and in this case, the specific type of the cathode active material is not limited, and an active material which can be used for a cathode of the battery known in the art may be used, and a person skilled in the art may select the material according to actual requirements. As an example, the cathode active material may include, but is not limited to, one or more of artificial graphite, natural graphite, hard carbon, soft carbon, a silicon-based material, or a tin-based material. Optionally, the silicon-based material may include one or more of elemental silicon, a silicon-oxygen compound (for example, silicon monoxide), a silicon-carbon composite, a silicon-nitrogen composite, and a silicon alloy. Further optionally, the tin-based material may include one or a plurality of elemental tin, a tin oxide compound, and a tin alloy. The cathode active material within the given range may be obtained either by preparation or by commercial paths.

In some specific embodiments of the present application, the cathode active material layer may further optionally include a binder, a conductive agent, and other optional auxiliary agents. As an example, the conductive agent may include one or more of superconducting carbon, acetylene black, carbon black, ketjen black, a carbon dot, a carbon nanotube, graphene, and a carbon nanofiber. As an example, the binder may be one or more of styrene-butadiene rubber (SBR), water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB). As an example, other optional auxiliaries may include, but are not limited to, thickening and dispersing agents (for example, carboxymethylcellulose sodium CMC-Na), and PTC thermistor materials.

In some embodiments of the present application, the separator in the battery may include, but is not limited to, a polyethylene porous film, a polypropylene porous film, a polyimide porous film, and a porous film formed by compounding a plurality of polymers.

A second aspect of the present application provides a battery, including: the battery cell according to the first aspect of the present application. Optionally, the battery may be a secondary battery. For example, the battery may be a lithium-ion secondary battery or the like.

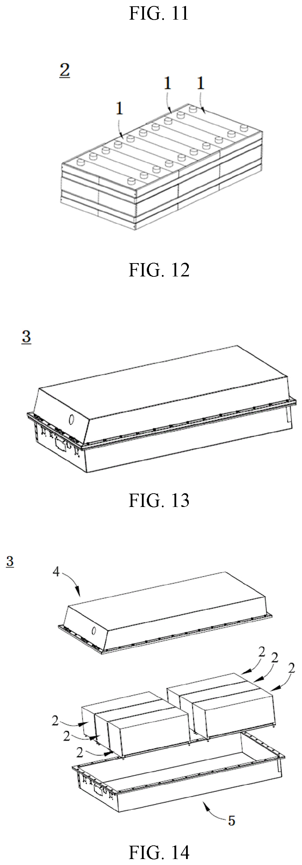

In some embodiments of the present application, the battery may be either a battery cell 1 (understood with reference to FIG. 11) or a battery module 2 (understood with reference to FIG. 12) or a battery pack 3 (understood with reference to FIG. 13) composed of the battery cell 1.

In some implementations, the battery may be the battery module. The battery module may include one or more battery cells, and the specific number of the battery cells may be adjusted according to application and capacity of the battery module. FIG. 12 shows a battery module 2 as an example. Referring to FIG. 12, in the battery module 2, a plurality of battery cells 1 may be arranged sequentially along the length direction of the battery module 2. Certainly, the battery cells may alternatively be arranged in any other manner. Further, the plurality of battery cells 1 may be fastened by using fasteners. Optionally, the battery module 2 may further include a casing having an accommodating space in which the plurality of battery cells 1 are accommodated.

In some implementations, the above battery module may be further assembled into a battery pack. The number of battery modules contained in the battery pack may be adjusted according to application and capacity of the battery pack. Referring to FIG. 13 or FIG. 14 (FIG. 13 and FIG. 14 show a battery pack 3 as an example), a battery case and a plurality of battery modules 2 disposed in the battery case may be included in the battery pack 3. The battery case may include an upper case body 4 and a lower case body 5, the upper case body 4 being capable of covering the lower case body 5 and forming a closed space for accommodating the battery module 2. The plurality of battery modules 2 may be arranged in any manner in the battery case.

In some implementations, the battery may include a first battery cell assembly and at least two second battery cell assemblies. The first battery cell assembly includes at least one battery cell 1 according to the first aspect of the present application. The second battery cell assembly includes at least two second battery cells. The at least two second battery cells are separately disposed on two sides of the first battery cell assembly in a thickness direction of the first battery cell assembly. The thickness direction of the first battery cell assembly is consistent with the thickness direction of the battery cell 1. Optionally, the battery cell according to the first aspect of this application is a prismatic battery cell having a wound electrode assembly. The prismatic shell, the wound electrode assembly, and the elastic buffer pad are combined, so that a problem of uneven stress on an electrode plate in the prismatic wound battery may be alleviated, and stability of a battery cell may be improved. The battery may be a battery module or a battery pack. For example, using the length direction of the first battery cell assembly as a row and the thickness direction of the first battery cell assembly as a column, in the battery module or the battery pack, the first battery cell assembly may include a plurality of battery cells 1 arranged in row and/or column, and/or, a plurality of second battery cells arranged in row and/or column may be independently provided on both sides of the first battery cell assembly in the thickness direction of the first battery cell assembly. Optionally, at least two second battery cells may be symmetrically arranged on both sides of the first battery cell assembly in the thickness direction of the first battery cell assembly. Still optionally, in the battery module or the battery pack, based on a total quantity of the battery cell 1 and the second battery cell, a quantity proportion of the battery cell 1 may be 30%-70%. The battery usually includes a plurality of battery cells. The plurality of battery cells are stacked in a thickness direction of the battery cells. In the thickness direction of the battery cells, a battery cell located in the middle of the battery is usually a part that expands most severely and has largest expansion force in a use process. The first elastic buffer pad is disposed in the first battery cell located in the middle, and the elastic buffer pad is not disposed in a second battery cell located on both sides of a first battery cell assembly in the thickness direction, which not only facilitates absorbing volume expansion of the battery cell that expands relatively more severely and has larger expansion force in the battery, reducing the expansion force of the battery cell in the middle of the battery, and improving volume stability of the battery, but also facilitates alleviating a problem that the battery cell located in the middle of the battery undergo stress concentration due to volume expansion of the battery cell in a later use stage of the battery, which in turn causes lithium precipitation and capacity plunge of the battery cell in the middle. In addition, the energy density of the battery is balanced.

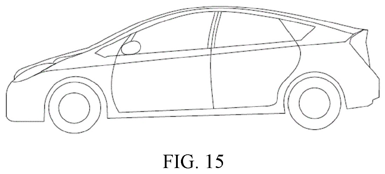

In addition, further provided in the present application is an electric device, including: the battery according to the second aspect of the present application. The battery, for example, the battery cell, the battery module or the battery pack may be used as a power source or an energy storage unit of the electric device. The electric device may include, but is not limited to, a mobile device (e.g., a mobile phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system. Referring to FIG. 15, it is understood that as a specific example, the electric device may be a vehicle. For the electric device, the specific type of the battery may be selected according to its use requirements, for example, the battery cell, the battery module or the battery pack may be selected.

As an example, the electric device is a pure electric vehicle, a hybrid electric vehicle, or a plug-in hybrid electric vehicle. In order to meet the demand for high power and high energy density of a battery by the electric device, a battery pack or a battery module may be used.

As another example, the electric device may be a mobile phone, a tablet computer, and a notebook computer. Generally, the electric device is light and thin, and may use a battery as a power source.

Examples of the present application are described below. The examples described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

**Example 1**

(I) Preparation of a secondary battery

(1) Preparation of a positive electrode plate

A positive active material $LiNi_{0.6}Co_{0.1}Mn_{0.3}O_2$, a conductive agent Super P, and a binder PVDF were mixed in a weight ratio of 96: 2: 2, and a solvent N-methylpyrrolidone was added to obtain a positive electrode slurry after uniform mixing via well stirring. Then, the positive electrode slurry was coated on two surfaces of a positive current collector aluminum foil with a thickness of 13 $\mu$m. The coating surface density of the positive electrode slurry on a single side of the aluminum foil was 20 mg/cm$^2$, followed by drying and cold pressing to obtain a positive electrode plate.

(2) Preparation of a negative electrode plate

A negative electrode active substance, artificial graphite, a conductive agent Super P, a binder styrene-butadiene rubber, and a thickener sodium carboxymethyl cellulose were mixed in a weight ratio of 96: 0.5: 2: 1.5, and a solvent deionized water was added to obtain a negative electrode slurry after uniform mixing via well stirring. Then, the negative electrode slurry was coated on two surfaces of a negative electrode current collector copper foil with a thickness of 6 $\mu$m. The coating thickness of the negative electrode slurry on a single side of the copper foil was 100 $\mu$m, and the coating surface density of the negative electrode slurry on a single side of the copper foil was 11 mg/cm$^2$, followed by drying and cold pressing to obtain a negative electrode plate.

(3) Preparation of electrolyte solution

In a glove box with an argon atmosphere having a water content less than 10 ppm, solvents EC (ethylene carbonate), PC (propylene carbonate), and DMC (dimethyl carbonate) were mixed in a ratio of 1: 1: 1, and then a fully dried lithium salt $LiPF_6$ was dissolved in the mixed organic solvent above, and stirred uniformly to obtain an electrolyte, where the concentration of $LiPF6_6$ was 1 mol/L.

(4) Preparation of a separator

A polyethylene porous film with a thickness of 7 $\mu$m was used as the separator.

(5) Preparation of an elastic buffer pad

Polypropylene with a thickness of 3 mm in a free state was used as an elastic buffer pad.

(6) Preparation of a secondary lithium battery

A positive electrode sheet, a separator, and a negative electrode sheet were stacked in sequence, so that the separator had a separation action between a positive electrode plate and a negative electrode plate; and winding and molding were performed to obtain an electrode assembly. Two electrode assemblies and an elastic buffer pad were placed in a battery shell (a distance $d_0$ between two inner wall surfaces arranged oppositely in a thickness direction thereof was 60 mm), a layer of an elastic buffer pad was sandwiched between the two electrode assemblies, and the prepared electrolyte was injected and packaged to obtain a lithium-ion lithium secondary battery.

**Examples 2-19 and Comparative Examples 1-3**

Differences between Examples 2-19 and Comparative Examples 1-3 and Example 1 are shown in Table 1. The elastic buffer pads in Examples 1-19 and Comparative Examples 1-3 are all porous structures. Different compression ratios of the elastic buffer pads made of the same material under the same stress are determined by different porosities and pore sizes of the elastic buffer pads. In addition, the elastic buffer pads in Examples 7 and 8 were all obtained by mixing polypropylene and polyethylene at a mass ratio of 1: 1 and melting them to form pores. The elastic buffer pads in Examples 7 and 8 had different porosities and pore sizes.

(II) Battery test method

(a) Test on sizes of a battery and an electrode assembly and a compression ratio of an elastic buffer pad

Two groups of secondary battery parallel samples are taken. After standing at 25°C for 5 minutes, the two groups of secondary batteries are charged to 4.4 V at a constant current of 0.33C, then charged to 0.05C at a constant voltage of 4.4 V, and allowed to stand for 5 minutes. One group of secondary batteries is disassembled to obtain an electrode assembly. The electrode assembly is cleaned and then dried and tested for a thickness of the electrode assembly, and a length Li and a height $h_1$ of the electrode assembly (the length and the height of the electrode assembly are matched with a length direction and a height direction of a shell of the secondary battery, respectively; note: the lengths of a cylindrical battery electrode assembly and a secondary battery are recorded as a perimeter). The other group of secondary batteries are discharged at a constant current of 0.33C to 2.8 V, and left to stand for 5 minutes. Then, the secondary batteries are disassembled to obtain an electrode assembly. The electrode assembly is washed and dried, and then tested for the thickness of the electrode assembly. The test method is as follows: The electrode assembly is placed between two parallel flat plates, a pressure of 0.1 MPa is applied to the electrode assembly by the flat plates, and a distance between the flat plates is measured to obtain the thickness of the electrode assembly. A total thickness $d_1$ of the electrode assembly in a fully charged state and a total thickness $d_2$ of the electrode assembly in a fully discharged state in the secondary battery are calculated.
A thickness of an elastic buffer pad in a free state is tested by using a Mitutoyo ID-C112MX micrometer thickness gauge under a test force of less than or equal to 1.8 N. A plurality of points (such as 5, 10, etc.) are randomly measured and averaged to calculate the total thickness d of the elastic buffer pad in the free state in the secondary battery, and a length $L_2$ and a height $h_2$ of the elastic buffer pad are tested (the length and the height of the elastic buffer pad match the length direction and the height direction of the electrode assembly, respectively). The elastic buffer pad is placed between two parallel flat plates. The flat plates are used to apply a pressure of 0.1 MPa or 0.5 MPa to the elastic buffer pad. A distance between the flat plates is measured to obtain the thickness of the electrode assembly under compressive stress. The compression ratio of the elastic buffer pad along its thickness under the compressive stress is the ratio of the thickness change of the elastic buffer pad in the free state and the compressive stress state to the thickness in the free state, multiplied by 100%.

(b) Test on a capacity retention rate of a secondary battery

A plurality of parallel samples of a secondary battery are taken. A secondary battery is left to stand at 25°C for 5 minutes, then charged to 4.4 V at a constant current of 0.5C, and then charged to 0.05C at a constant voltage of 4.4 V, and left to stand for 5 minutes. Then the secondary battery is discharged to 2.8 V at a constant current of 0.33C, and left to stand for 5 minutes. The discharge capacity $C_0$ is recorded. The above operation is repeated. The battery capacity retention rate is calculated by the following formula: Capacity retention rate of secondary battery after n cycles = $C_n/C_0 \times 100\%$. The capacity retention rate of a battery after n cycles is recorded.

(c) Cell Swelling Force Test for a battery cell

A secondary battery is left to stand at 25°C for 5 minutes, then charged at a constant current of 0.5C to 4.4 V, further charged at a constant voltage of 4.4 V to 0.05C, and left to stand for 5 minutes. Thereafter, the secondary battery is discharged at a constant current of 0.33C to 2.8 V and left to stand for 5 minutes. 6 pressure sensors are arranged at different positions on a side of the secondary battery in a thickness direction. The secondary battery is charged at a constant current of 0.5C to 4.4 V, then charged at a constant voltage of 4.4 V to 0.05C, and left to stand for 5 minutes. During the charging, with 30% SOC, 50% SOC, and 100% SOC, expansion force displayed by the pressure sensors at different positions of the secondary battery is recorded. The average value of the expansion force in different charging states is calculated. A range of a change rate of each expansion force in each different charging state relative to the average value was calculated based on the average value.

(d) Lithium precipitation and capacity plunge test

A secondary battery is left to stand at 25°C for 5 minutes, then charged at a constant current of 0.5C to 4.4 V, further charged at a constant voltage of 4.4 V to 0.05C, and left to stand for 5 minutes. Thereafter, the secondary battery is discharged at a constant current of 0.33C to 2.8 V and left to stand for 5 minutes. The above charge-discharge cycle is repeated until the capacity of the secondary battery is significantly reduced. After the charge-discharge cycle test is completed, the secondary battery is disassembled to observe whether lithium precipitation occurs on the negative electrode plate.
Examples 1-19 and Comparative examples 1-3 are subjected to related tests. The test results are shown in Table 2.

Table 1 Differences of Examples 1-19 and Comparative examples 1-3

| | Battery type | Positive electrode active material | $d_1$ /mm | $d_2$ /mm | $d_0$ /mm | d /mm | Elastic buffer pad material | Elastic buffer pad number | Elastic buffer pad arrangement position | Compression ratio under a pressure of 0.1 MPa | Compression ratio under a pressure of 0.5 MPa | Compression ratio under a pressure of 1 MPa |
|---|---|---|---|---|---|---|---|---|---|---|---|---|
| Example 1 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 60.0% |
| Comparative Example 1 | Square | $LiNi_{0.6}Co_{0.1}Mn_{0.3}O_2$ | 57 | 54 | 60 | 3 | Polypropylene | 1 | Between two electrode assemblies | 20.0% | 30.0% | 42.0% |
| Comparative Example 2 | Square | $LiNi_{0.6}Co_{0.1}Mn_{0.3}O_2$ | 57 | 54 | 60 | 3 | Polypropylene | 1 | Between two electrode assemblies | 40.0% | 50.0% | 80.0% |
| Comparative Example 3 | Square | $LiNi_{0.6}Co_{0.1}Mn_{0.3}O_2$ | 57 | 54 | 60 | 3 | Melamine | 1 | Between two electrode assemblies | 33.0% | 38.0% | 45.0% |
| Example 2 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 50.0% |
| Example 3 | Square | $LiNi_{0.6}Co_{0.1}Mn_{0.3}O_2$ | 57 | 54 | 60 | 3 | Polypropylene | 1 | Between two electrode assemblies | 15.0% | 42.0% | 70.0% |
| Example 4 | Square | $LiNi_{0.6}Co_{0.1}Mn_{0.3}O_2$ | 57 | 54 | 60 | 3 | Polypropylene | 1 | Between two electrode assemblies | 19.0% | 45.0% | 80.0% |
| Example 5 | Square | $LiNi_{0.6}Co_{0.1}Mn_{0.3}O_2$ | 57 | 54 | 60 | 3 | Polypropylene | 1 | Between two electrode assemblies | 30.0% | 50.0% | 85.0% |
| Example 6 | Square | $LiNi_{0.6}Co_{0.1}Mn_{0.3}O_2$ | 57 | 54 | 60 | 3 | Polyurethane | 1 | Between two electrode assemblies | 15.0% | 27.0% | 75.0% |
| Example 7 | Square | $LiNi_{0.6}Co_{0.1}Mn_{0.3}O_2$ | 57 | 54 | 60 | 3 | Polypropylene + polyethylene | 1 | Between two electrode assemblies | 10.0% | 45.0% | 80.0% |

| | Battery type | Positive electrode active material | $d_1$ /mm | $d_2$ /mm | $d_0$ /mm | d /mm | Elastic buffer pad material | Elastic buffer pad number | Elastic buffer pad arrangement position | Compression ratio under a pressure of 0.1 MPa | Compression ratio under a pressure of 0.5 MPa | Compression ratio under a pressure of 1 MPa |
|---|---|---|---|---|---|---|---|---|---|---|---|---|
| Example 8 | Square | $LiNi_{0.6}Co_{0.1}Mn_{0.3}O_2$ | 57 | 54 | 60 | 3 | Polypropylene + polyethylene | 1 | Between two electrode assemblies | 20.0% | 60.0% | 82.0% |
| Example 9 | Square | $LiNi_{0.6}Co_{0.1}Mn_{0.3}O_2$ | 57 | 54 | 60 | 0.9 | Polypropylene | 1 | Between two electrode assemblies | 10.0% | 40.0% | 60.0% |
| Example 10 | Square | $LiNi_{0.6}Co_{0.1}Mn_{0.3}O_2$ | 57 | 54 | 60 | 1.8 | Polypropylene | 1 | Between two electrode assemblies | 10.0% | 40.0% | 60.0% |
| Example 11 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 60.0% |
| Example 12 | Square | $LiNi_{0.6}Co_{0.1}Mn_{0.3}O_2$ | 57 | 54 | 60 | 5.4 | Polypropylene | 1 | Between two electrode assemblies | 10.0% | 40.0% | 60.0% |
| Example 13 | Square | $LiNi_{0.6}Co_{0.1}Mn_{0.3}O_2$ | 57 | 54 | 60 | 5.4 | Polypropylene | 2 | According to a 1/1 thickness ratio, being respectively arranged on two sides of two electrode assemblies | 10.0% | 40.0% | 60.0% |
| Example 14 | Square | $LiNi_{0.6}Co_{0.1}Mn_{0.3}O_2$ | 57 | 54 | 60 | 5.4 | Polypropylene | 3 | According to a thickness ratio of 1/1/1, being arranged on both sides and in a middle of an electrode assembly | 10.0% | 40.0% | 60.0% |

EP 4 756 945 A1

(continued)

| | Battery type | Positive electrode active material | $d_1$ /mm | $d_2$ /mm | $d_0$ /mm | d /mm | Elastic buffer pad material | Elastic buffer pad number | Elastic buffer pad arrangement position | Compression ratio under a pressure of 0.1 MPa | Compression ratio under a pressure of 0.5 MPa | Compression ratio under a pressure of 1 MPa |
|---|---|---|---|---|---|---|---|---|---|---|---|---|
| Example 15 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 60.0% |
| Example 16 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 60.0% |
| Example 17 | Square | $LiNi_{0.6}Co_{0.1}Mn_{0.3}O_2$ | 57 | 54 | 60 | 3 | Polypropylene | 1 | Between two electrode assemblies | 10.0% | 40.0% | 60.0% |
| Example 18 | Cylindrical | $LiNi_{0.6}Co_{0.1}Mn_{0.3}O_2$ | 34.2 | 32.4 | 36 | 1.8 | Polypropylene | 1 | Between an electrode assembly and a shell | 10.0% | 40.0% | 60.0% |
| Example 19 | Cylindrical | $LiNi_{0.6}Co_{0.1}Mn_{0.3}O_2$ | 32.4 | 30 | 36 | 1.8 | Polypropylene | 1 | Between an electrode assembly and a shell | 10.0% | 40.0% | 60.0% |

Table 2 Some differences and related test results of Examples 1-19 and Comparative examples 1-3

| | Compression ratio under a pressure of 0.1 MPa | Compression ratio under a pressure of 0.5 MPa | Compression ratio under a pressure of 1 MPa | $(d+d_2)/d_0$ | $(d+d_1)/d_0$ | $d/d_2$ | $L_1/L_2$ | $h_1/h_2$ | Capacity Retention Rate after 500 Cycles | Expansion force at different positions of a battery cell | | | | | | Whether a negative electrode plate is subjected to lithium precipitation when a capacity of a battery pack is significantly attenuated |
|---|---|---|---|---|---|---|---|---|---|---|---|---|---|---|---|---|
| | | | | | | | | | | 30% SOC | | 50% SOC | | 100% SOC | | |
| | | | | | | | | | | Average value /N | Difference between a maximum value and a minimum value / N | Average value /N | Difference between a maximum value and a minimum value / N | Average value /N | Difference between a maximum value and a minimum value / N | |
| Example 1 | 10.0% | 40.0% | 60.0% | 95.0% | 100.0% | 6% | 0.9 | 0.9 | 94.2% | 300 | 40 | 400 | 43 | 500 | 46 | No |
| Comparative Example 1 | 20.0% | 30.0% | 42.0% | 95.0% | 100.0% | 6% | 0.9 | 0.9 | 85.6% | 400 | 60 | 500 | 65 | 600 | 75 | Yes |
| Comparative Example 2 | 40.0% | 50.0% | 80.0% | 95.0% | 100.0% | 6% | 0.9 | 0.9 | 86.2% | 260 | 50 | 350 | 60 | 430 | 70 | Yes |
| Comparative Example 3 | 33.0% | 38.0% | 45.0% | 95.0% | 100.0% | 6% | 0.9 | 0.9 | 80.3% | 410 | 70 | 490 | 76 | 580 | 88 | Yes |
| Example 2 | 10.0% | 40.0% | 50.0% | 95.0% | 100.0% | 6% | 0.9 | 0.9 | 93.2% | 330 | 40 | 420 | 44 | 510 | 48 | No |
| Example 3 | 15.0% | 42.0% | 70.0% | 95.0% | 100.0% | 6% | 0.9 | 0.9 | 95.3% | 250 | 35 | 330 | 40 | 410 | 45 | No |
| Example 4 | 19.0% | 45.0% | 80.0% | 95.0% | 100.0% | 6% | 0.9 | 0.9 | 95.7% | 245 | 33 | 325 | 38 | 400 | 42 | No |
| Example 5 | 30.0% | 50.0% | 85.0% | 95.0% | 100.0% | 6% | 0.9 | 0.9 | 93.5% | 240 | 40 | 310 | 45 | 400 | 49 | No |
| Example 6 | 15.0% | 27.0% | 75.0% | 95.0% | 100.0% | 6% | 0.9 | 0.9 | 93.2% | 250 | 35 | 360 | 55 | 405 | 65 | No |
| Example 7 | 10.0% | 45.0% | 80.0% | 95.0% | 100.0% | 6% | 0.9 | 0.9 | 96.2% | 255 | 32 | 325 | 38 | 400 | 42 | No |
| Example 8 | 20.0% | 60.0% | 82.0% | 95.0% | 100.0% | 6% | 0.9 | 0.9 | 94.5% | 240 | 40 | 310 | 45 | 400 | 49 | No |
| Example 9 | 10.0% | 40.0% | 60.0% | 91.5% | 96.5% | 2% | 0.9 | 0.9 | 93.1% | 180 | 30 | 250 | 35 | 320 | 40 | No |
| Example 10 | 10.0% | 40.0% | 60.0% | 93.0% | 98.0% | 3% | 0.9 | 0.9 | 94.8% | 220 | 28 | 290 | 32 | 380 | 39 | No |
| Example 11 | 10.0% | 40.0% | 60.0% | 95.0% | 100.0% | 6% | 0.9 | 0.9 | 94.2% | 300 | 40 | 400 | 43 | 500 | 46 | No |
| Example 12 | 10.0% | 40.0% | 60.0% | 99.0% | 104.0% | 10% | 0.9 | 0.9 | 92.1% | 500 | 45 | 620 | 50 | 730 | 55 | No |
| Example 13 | 10.0% | 40.0% | 60.0% | 99.0% | 104.0% | 10% | 0.9 | 0.9 | 92.0% | 500 | 45 | 620 | 50 | 730 | 54 | No |
| Example 14 | 10.0% | 40.0% | 60.0% | 99.0% | 104.0% | 10% | 0.9 | 0.9 | 92.5% | 500 | 44 | 620 | 49 | 730 | 53 | No |

(continued)

| | Compression ratio under a pressure of 0.1 MPa | Compression ratio under a pressure of 0.5 MPa | Compression ratio under a pressure of 1 MPa | $(d+d_2)/d_0$ | $(d+d_1)/d_0$ | $d/d_2$ | $L_1/L_2$ | $h_1/h_2$ | Capacity Retention Rate after 500 Cycles | Expansion force at different positions of a battery cell | | | | | | Whether a negative electrode plate is subjected to lithium precipitation when a capacity of a battery pack is significantly attenuated |
|---|---|---|---|---|---|---|---|---|---|---|---|---|---|---|---|---|
| | | | | | | | | | | 30% SOC | | 50% SOC | | 100% SOC | | |
| | | | | | | | | | | Average value /N | Difference between a maximum value and a minimum value / N | Average value /N | Difference between a maximum value and a minimum value / N | Average value /N | Difference between a maximum value and a minimum value / N | |
| Example 15 | 10.0% | 40.0% | 60.0% | 95.0% | 100.0% | 6% | 0.8 | 0.8 | 91.0% | 290 | 45 | 390 | 50 | 490 | 55 | No |
| Example 16 | 10.0% | 40.0% | 60.0% | 95.0% | 100.0% | 6% | 1.1 | 1.05 | 94.1% | 300 | 40 | 400 | 43 | 500 | 46 | No |
| Example 17 | 10.0% | 40.0% | 60.0% | 95.0% | 100.0% | 6% | 0.9 | 1 | 94.6% | 300 | 40 | 400 | 43 | 500 | 46 | No |
| Example 18 | 10.0% | 40.0% | 60.0% | 95.0% | 100.0% | 6% | 0.9 | 0.9 | 95.0% | / | / | / | / | / | / | No |
| Example 19 | 10.0% | 40.0% | 60.0% | 88.3% | 95.0% | 6% | 0.9 | 0.9 | 93.4% | / | / | / | / | / | / | No |

Conclusion:

It can be seen from Examples 1-19, Comparative Examples 1-3, and Tables 1-2 that the solutions of the above embodiments of the present application facilitate improvement of volume stability and stress uniformity of a battery cell and an electrode plate during charging and discharging, and reduce the risk of expansion deformation or performance deterioration. Moreover, by further adjusting the ratio of the sum of the total thickness d of the elastic buffer pad in the free state and the total thickness $d_1$ ($d_2$) of the electrode assembly in the fully charged state to the distance $d_0$ between the two inner wall surfaces of the shell that are oppositely disposed along the thickness direction of the shell, and the size of the elastic buffer pad relative to the electrode assembly, further improvement of volume stability and force uniformity of a battery cell during long-term use is also facilitated, and the risk of expansion deformation or performance deterioration of a battery cell is reduced.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

**Claims**

1. A battery cell, comprising:

   a shell;
   at least one electrode assembly, which is disposed inside the shell; and
   at least one elastic buffer pad, which is arranged on at least part of the surface of the electrode assembly and/or inside the electrode assembly, wherein the compression ratio of the elastic buffer pad in a thickness direction thereof is less than or equal to 30% under a pressure of 0.1 MPa, and the compression ratio of the elastic buffer pad in the thickness direction thereof is greater than or equal to 50% under a pressure of 1 MPa.

2. The battery cell according to claim 1, wherein the elastic buffer pad is provided between the electrode assembly and the shell, and/or the elastic buffer pad is provided between two adjacent electrode assemblies.

3. The battery cell according to claim 1 or 2, wherein the compression ratio of the elastic buffer pad in the thickness direction thereof under a pressure of 0.1 Mpa is less than or equal to 20%, optionally 10%; and/or
   the compression ratio of the elastic buffer pad in the thickness direction thereof under a pressure of 1 Mpa is greater than or equal to 60%, optionally 80%.

4. The battery cell according to any one of claims 1 to 3, wherein the compression ratio of the elastic buffer pad under a pressure of 0.5 Mpa is 30%-60%.

5. The battery cell according to any one of claims 1 to 4, wherein the electrode assembly is a wound electrode assembly and comprises a straight portion and a corner portion, and the elastic buffer pad is provided on at least a part of surfaces of the straight portion and/or the corner portion.

6. The battery cell according to any one of claims 1 to 5, wherein the battery cell is a prismatic battery cell.

7. The battery cell according to claim 6, wherein the battery cell comprises: at least one first elastic buffer pad and/or at least one second elastic buffer pad, wherein the first elastic buffer pad and the electrode assembly are stacked in a thickness direction of the battery cell, and/or the second elastic buffer pad and the electrode assembly are stacked in a length direction of the battery cell.

8. The battery cell according to claim 7, wherein at least one of the following conditions is satisfied:

in the thickness direction of the battery cell, a sum of a total thickness of the first elastic buffer pad in a free state and a total thickness of the electrode assembly in a fully discharged state is 80%-99%, optionally 85%-98%, and further optionally 90%-95% of a distance between inner wall surfaces of the shell;

in the thickness direction of the battery cell, a sum of the total thickness of the first elastic buffer pad in the free state and the total thickness of the electrode assembly in a fully charged state is 95%-110%, optionally 98%-105%, and further optionally 99%-102% of the distance between the inner wall surfaces of the shell;

in the length direction of the battery cell, a sum of a total thickness of the second elastic buffer pad in a free state and a length of the electrode assembly in a fully discharged state is 80%-99%, optionally 85%-98%, and further optionally 90%-95% of the distance between inner wall surfaces of the shell; and

in the length direction of the battery cell, the sum of the total thickness of the second elastic buffer pad in the free state and a length of the electrode assembly in the fully charged state is 95% to 110%, optionally 98% to 105%, and further optionally 99% to 102% of the distance between the inner wall surfaces of the shell.

9. The battery cell according to claim 7 or 8, wherein a ratio of the total thickness of the first elastic buffer pad in the free state to the total thickness of the electrode assembly in the fully discharged state is 2%-25%, optionally 5%-20%, and further optionally 8%-15%.

10. The battery cell according to any one of claims 7 to 9, wherein a ratio of an extension distance of the first elastic buffer pad in the free state in the length direction of the electrode assembly to a length of the electrode assembly is 0.8-1.2, optionally 0.85-1.1, and further optionally 0.9-1.05; and/or

a ratio of the extension distance of the first elastic buffer pad in the free state in the height direction of the electrode assembly to the height of the electrode assembly is 0.8-1.2, optionally 0.85-1.1, and further optionally 0.9-1.05.

11. The battery cell according to any one of claims 7 to 10, wherein an orthographic projection of the first elastic buffer pad on the electrode assembly is located in a region where the electrode assembly is located.

12. The battery cell according to any one of claims 1 to 5, wherein the battery cell is a cylindrical battery cell, at least one elastic buffer pad and the electrode assembly are stacked in a radial direction of the electrode assembly, and a distance between inner wall surfaces of the shell is equal to a diameter of an inner cavity of the shell.

13. The battery cell according to claim 12, wherein a sum of a total thickness of the elastic buffer pad in a free state and a total thickness of the electrode assembly in a fully discharged state is 80%-99%, optionally 85%-98%, and further optionally 90%-95% of the diameter of the inner cavity of the shell; and/or

a sum of the total thickness of the elastic buffer pad in the free state and a total thickness of the electrode assembly in a fully charged state is 85%-110%, optionally 98%-105%, and further optionally 99%-102% of the diameter of the inner cavity of the shell.

14. The battery cell according to claim 12 or 13, wherein the elastic buffer pad is provided between the electrode assembly and the shell, and a ratio of an extension distance of the elastic buffer pad in a free state in a circumferential direction of the electrode assembly to a perimeter of the electrode assembly is 0.8-1.2, optionally 0.85-1.1, and further optionally 0.9-1.05; and/or

a ratio of an extension distance of the elastic buffer pad in the free state in a height direction of the electrode assembly to a height of the electrode assembly is 0.8-1.2, optionally 0.85-1.1, and further optionally 0.9-1.05.

15. The battery cell according to claim 14, wherein an extension distance of the elastic buffer pad in a free state in a circumferential direction of the electrode assembly is less than or equal to a perimeter of the electrode assembly; and/or, an extension distance of the elastic buffer pad in the free state in the height direction of the electrode assembly is less than or equal to a height of the electrode assembly.

16. The battery cell according to any one of claims 1 to 15, wherein a thickness of a single elastic buffer pad in a free state is 2%-15%, optionally 5%-10%, of a thickness of a single electrode assembly in a fully discharged state; and/or the thickness of the single elastic buffer pad in the free state is 0.2 mm-10.5 mm.

17. A battery, comprising the battery cell according to any one of claims 1 to 16.

18. An electric device, comprising the battery according to claim 17.

FIG. 1

FIG. 2

FIG. 3

FIG. 4

FIG. 5

FIG. 6

FIG. 7

FIG. 8

1

11
13
12

Thickness direction

FIG. 9

1

11
13
12

FIG. 10

1

FIG. 11

FIG. 12

FIG. 13

FIG. 14

FIG. 15

## INTERNATIONAL SEARCH REPORT

| International application No. |
| --- |
| **PCT/CN2023/120508** |

**A. CLASSIFICATION OF SUBJECT MATTER**

H01M 10/04(2006.01)i; H01M 50/20(2021.01)i; H01M 50/133(2021.01)i

According to International Patent Classification (IPC) or to both national classification and IPC

**B. FIELDS SEARCHED**

Minimum documentation searched (classification system followed by classification symbols)

H01M10/-, H01M50/-

Documentation searched other than minimum documentation to the extent that such documents are included in the fields searched

Electronic data base consulted during the international search (name of data base and, where practicable, search terms used)

CNTXT, ENTXTC, DWPI, CNKI: 电池, 电极, 壳, 缓冲, 弹性, 垫, 厚度, 压缩, battery, electrolyte, shell, buffer, layer, pad, thickness, compress

**C. DOCUMENTS CONSIDERED TO BE RELEVANT**

| Category* | Citation of document, with indication, where appropriate, of the relevant passages | Relevant to claim No. |
| --- | --- | --- |
| X | CN 216413130 U (CONTEMPORARY AMPEREX TECHNOLOGY CO., LTD.) 29 April 2022 (2022-04-29) <br> claims 1 and 7-10 | 1-18 |
| X | CN 218677233 U (CONTEMPORARY AMPEREX TECHNOLOGY CO., LTD.) 21 March 2023 (2023-03-21) <br> claims 1-15 | 1-18 |
| X | KR 20220030545 A (SK ON CO., LTD.) 11 March 2022 (2022-03-11) <br> claims 1-16 | 1-18 |
| X | US 2023231238 A1 (SAMSUNG SDI CO., LTD.) 20 July 2023 (2023-07-20) <br> claims 1-17 | 1-18 |
| A | CN 110265591 A (CONTEMPORARY AMPEREX TECHNOLOGY CO., LTD.) 20 September 2019 (2019-09-20) <br> claims 1-10 | 1-18 |
| A | CN 115842205 A (CONTEMPORARY AMPEREX TECHNOLOGY CO., LTD.) 24 March 2023 (2023-03-24) <br> claims 1-24 | 1-18 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 November 2023** | **29 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/120508** |

C.    DOCUMENTS CONSIDERED TO BE RELEVANT

| Category* | Citation of document, with indication, where appropriate, of the relevant passages | Relevant to claim No. |
| --- | --- | --- |
| A | CN 217334279 U (CONTEMPORARY AMPEREX TECHNOLOGY CO., LTD.) 30 August 2022 (2022-08-30)<br>      claims 1-9 | 1-18 |
| A | CN 217740672 U (CONTEMPORARY AMPEREX TECHNOLOGY CO., LTD.) 04 November 2022 (2022-11-04)<br>      claims 1-19 | 1-18 |
| A | CN 115832540 A (CONTEMPORARY AMPEREX TECHNOLOGY CO., LTD.) 21 March 2023 (2023-03-21)<br>      claims 1-19 | 1-18 |

Form PCT/ISA/210 (second sheet) (July 2022)

**INTERNATIONAL SEARCH REPORT**
Information on patent family members

International application No.

**PCT/CN2023/120508**

| Patent document cited in search report | | | Publication date (day/month/year) | Patent family member(s) | | | Publication date (day/month/year) |
|---|---|---|---|---|---|---|---|
| CN | 216413130 | U | 29 April 2022 | None | | | |
| CN | 218677233 | U | 21 March 2023 | None | | | |
| KR | 20220030545 | A | 11 March 2022 | None | | | |
| US | 2023231238 | A1 | 20 July 2023 | JP | 2023106356 | A | 01 August 2023 |
| | | | | EP | 4216303 | A1 | 26 July 2023 |
| | | | | KR | 20230112435 | A | 27 July 2023 |
| CN | 110265591 | A | 20 September 2019 | US | 2021328251 | A1 | 21 October 2021 |
| | | | | US | 11223063 | B2 | 11 January 2022 |
| | | | | US | 2022246975 | A1 | 04 August 2022 |
| | | | | US | 11616251 | B2 | 28 March 2023 |
| | | | | EP | 3641006 | A4 | 22 April 2020 |
| | | | | EP | 3641006 | A1 | 28 September 2022 |
| | | | | WO | 2020042411 | A1 | 05 March 2020 |
| CN | 115842205 | A | 24 March 2023 | None | | | |
| CN | 217334279 | U | 30 August 2022 | None | | | |
| CN | 217740672 | U | 04 November 2022 | None | | | |
| CN | 115832540 | A | 21 March 2023 | None | | | |

Form PCT/ISA/210 (patent family annex) (July 2022)